Europäisches Patentamt

European Patent Office

Office européen des brevets

(19)

(11) Publication number: **0 045 177**
**A1**

(12) # EUROPEAN PATENT APPLICATION

(21) Application number: **81303351.1**

(22) Date of filing: **22.07.81**

(51) Int. Cl.³: **A 01 D 53/06**

(30) Priority: **24.07.80 GB 8024264**

(43) Date of publication of application: **03.02.82**
**Bulletin 82/5**

(84) Designated Contracting States: **BE DE FR GB NL**

(71) Applicant: **Birmid Qualcast (Home & Garden Equipment) Limited, Coleridge Street Sunnyhill, Derby DE3 7JT (GB)**

(72) Inventor: **Davies, Alan James Edward, Cannock Road, High Town, Hednesford, Staffordshire WD11 2TD (GB)**

(74) Representative: **Sanders, Peter Colin Christopher et al, BROOKES & MARTIN High Holborn House 52/54 High Holborn, London WC1V 6SE (GB)**

(54) **Airborne mowers.**

(57)    An airborne mower includes a cutter (4) mounted beneath a deck (1) for rotation about a generally vertical axis, the cutter being disposed in an open-bottomed cutting chamber (2). An impeller (3) produces a generally downward flow of pressurised air around the outside of the cutting chamber (2) and a proportion of this air flows into the chamber around the bottom bounding edge of the chamber. Air flows out of the cutting chamber (2) through an exit opening (11) communicating with a discharge chute (10) so that grass cuttings are discharged into the chute (10) without interfering with the flow of lift air.

EP 0 045 177 A1

AIRBORNE   MOWERS

A known disadvantage of most airborne mowers is
that the grass cuttings are left behind on the ground.
This is not only unsightly but can even encourage the
growth of weeds.

The problem has been to provide a flow of air which
will carry grass cuttings into a grass collection device
but without substantially reducing the pressure of the
air cushion on which the mower rides. Some attempts
have been made to overcome this problem, but so far
none have been entirely successful.

In accordance with the present invention there is
provided an airborne mower comprising a cutter mounted
beneath a deck for rotation about a generally vertical axis,
means for producing a first flow of pressurised air to lift
the deck off the ground while the cutter is cutting, means
for producing a second flow of air to carry the grass
cuttings into a discharge chute, and means for separating
the first and second flows of air such that the grass
cuttings are discharged into the chute without interference
with the first flow of air.

Preferably the second flow of air is derived from
the first flow of air. In particular, the cutter may be rotatable within an open-bottomed cutting chamber located beneath the deck, and the first air flow producing means may comprise an impeller disposed beneath the deck but outside the chamber for generating a generally downward flow of pressurised air around the outside of the chamber to lift the mower off the ground. The discharge chute may then communicate with an exit opening disposed in the cutting chamber, the arrangement being such that, in use, a proportion of the downwardly directed flow of pressurised air subsequently flows radially inwardly and upwardly into the cutting chamber and is discharged through the exit opening along with the grass cuttings.

Preferably the cutting chamber is an inner generally dome-shaped chamber nesting within a similar outer chamber, the two chambers being axially spaced apart and the impeller being disposed above the inner chamber in the space between the two chambers. The pressurised air then flows downwardly between the two chambers and is drawn radially into the inner chamber under the bottom bounding edge of the inner chamber when the mower is lifted off the ground.

During its downward flow between the walls of the chambers, a radially inward component of velocity is preferably imparted to the flow of air which assists the flow into the cutting chamber as it emerges from between the two walls. This component can be imparted, for example, by appropriately shaping at least one of the walls confining the downward flow of air.

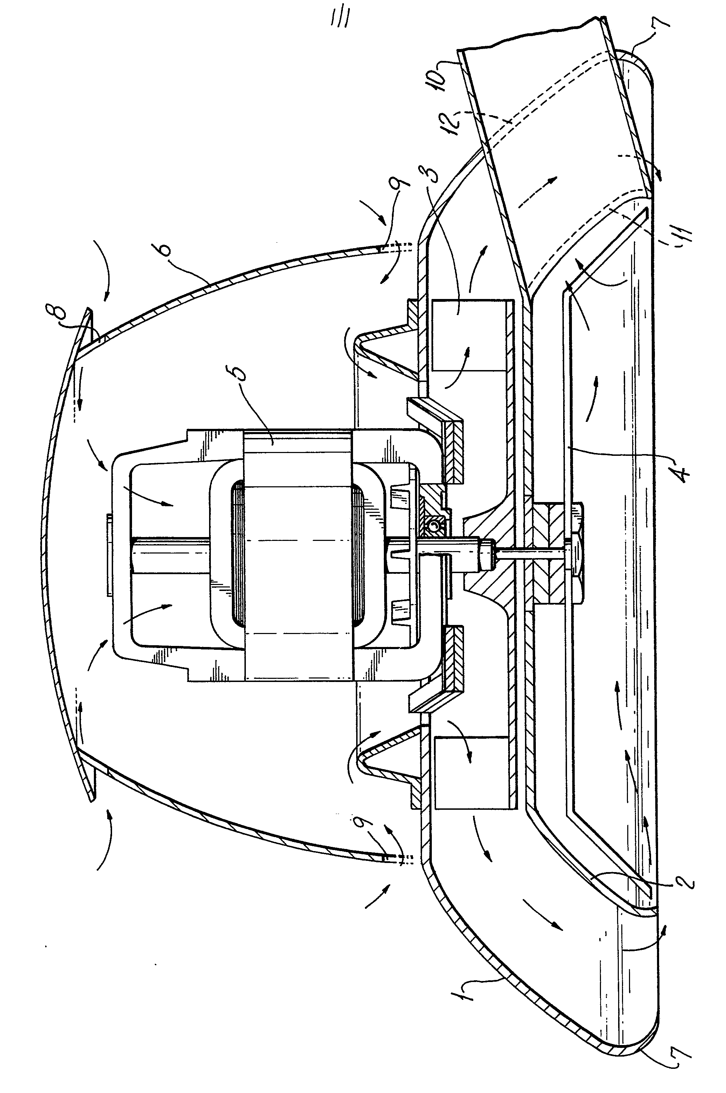

By way of example only, an embodiment of the invention will now be described with reference to the accompanying drawing in which the sole figure is a partly sectioned general assembly drawing of an airborne mower embodying the invention.

Referring to this figure, the illustrated mower consists of an electric motor 5 driving an impeller 3 and a cutter blade 4. Any other suitable cutting element can be substituted for the blade 4, and the drive may be from a petrol motor rather than from an electric motor.

The impeller 3 is disposed between an inner chamber 2 and an outer chamber 1, both chambers being generally dome-shaped. The cutter blade 4 is disposed within the inner chamber 2.

The motor 5 is protected by a hood 6, and an upper air inlet 8 is provided for cooling air to the motor. The air required to lift the mower is drawn in through the lower inlet 9.

The air flows in the direction shown by the arrows and the cooling air which is drawn through the inlet 8 combines with the air drawn through the inlet 9 as it passes through a central opening in the roof of the outer chamber 1. The impeller 3 then forces the air downwardly over the outside of the inner chamber 2, the air being confined between the two chambers 1 and 2 and producing a cushion of air bounding the inner chamber 2. This lifts the mower off the ground, and air thus flows underneath the bottom edge of the inner chamber. The resulting build-up of pressure within the inner chamber is relieved through an exit opening 11 in the wall of the chamber, the opening 11 lying at the entrance of a discharge chute 10 which also passes through a corresponding opening 12 in the wall of the outer chamber 1.

There is thus a continuous flow of air through the chamber 2, and the air emerges from the discharge chute 10 along with grass cuttings produced by the cutter blade. This discharging flow of air through the inner chamber is quite independent of the flow of air between the two chambers induced by the impeller so that the impeller continues to provide the necessary lift air while grass cuttings are ejected through the discharge chute and into a grass collection device (not shown).

The bottom portion 7 of the side wall of the outer chamber 1 is curved inwardly through an angle of at least $30^\circ$ (preferably in the region of $45^\circ$) and, in this particular example, it terminates in a knife-edge with a flat bottom face lying substantially in a horizontal plane. This imparts a radially inward component to the velocity of the air emerging from between the walls 1 and 2.

0045177

CLAIMS:

1.       An airborne mower comprising a cutter mounted beneath a deck for rotation about a generally vertical axis, and means for producing a first flow of pressurised air to lift the deck off the ground while the cutter is cutting, characterised in that the mower further comprises means for producing a second flow of air to carry the grass cuttings through an opening in the deck, and means for separating the first and second air flows such that the grass cuttings are carried through the said opening without interference from the first air flow.

2.       A mower according to claim 1 in which the second air flow is derived from the first air flow.

3.       A mower according to claim 2 in which the separating means includes an open-bottomed cutting chamber located beneath the deck, the cutter being rotatable within the chamber and the first air flow being a generallly downward flow of pressurised air around the outside of the chamber.

4.       A mower according to claim 3 in which the said opening in the deck communicates with an opening in the cutting chamber, the arrangement being such that, in use, a proportion of the downwardly directed flow of pressurised air subsequently flows radially inwardly and upwardly into the cutting chamber and is discharged through the said openings along with the grass cuttings.

5.    A mower according to claim 4 in which the deck comprises a generally dome-shaped structure, the cutting chamber nesting within the dome-shaped structure and being axially spaced therefrom.

6.    A mower according to claim 5 in which an impeller is disposed in the space between the outer dome-shaped deck and the inner cutting chamber.

7.    A mower according to claim 6 in which a radially inward component of velocity is imparted to the downward flow of air to assist the flow of air into the cutting chamber beneath the bottom bounding edge of the cutting chamber when the mower is clear of the ground.

8.    A mower according to claim 7 in which the radially inward component of velocity is imparted by appropriately shaping at least one of the walls confining the downward flow of air.

0045177

## EUROPEAN SEARCH REPORT

**European Patent Office**

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| X | US - A - 3 838 558 (GOODCHILD)<br>* Whole document * | 1-6 | A 01 D 53/06 |
| X | US - A - 3 186 151 (HANSOM)<br>* Column 1, line 68 - column 2, line 29; column 2, lines 63-72 * | 1-8 | |
| | US - A - 3 170 276 (HALL)<br>* Column 2, lines 3-57 * | 3,5,6 | **TECHNICAL FIELDS SEARCHED (Int. Cl.³)**<br><br>A 01 D |
| | GB - A - 2 028 089 (BLACK & DECKER)<br>* Page 3, lines 17-22; figure 4 * | 7,8 | |
| | AU - A - 57664/65 (AGER)<br>* Whole document * | 1,5,6 | |
| A | GB - A - 997 528 (FLYMO)<br>* Whole document * | 1 | |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 09-10-1981 | DE LAMEILLEURE |

EPO Form 1503 1  06.78